# FASCICULE DE BREVET EUROPEEN

(11) **EP 3 215 358 B1**
(45) Date de publication et mention de la délivrance du brevet: **31.01.2018**
(21) Numéro de dépôt: 15797141.7
(22) Date de dépôt: 30.10.2015
(51) Int. Cl.: B29C 73/10, B29C 37/00, B29C 70/44, B29C 73/32

(54) **PROCÉDÉ POUR LA RÉPARATION D'UNE PEAU PERFORÉE D'UN PANNEAU AU MOYEN D'UN DOUBLEUR**
VERFAHREN ZUR REPARATUR EINER PERFORIERTEN HAUT EINER PLATTE MIT EINEM VERDOPPLER
METHOD OF REPAIRING A PERFORATED SKIN OF A PANEL USING A DOUBLER

(30) Priorité: 03.11.2014 FR 1460577
(43) Date de publication de la demande: 13.09.2017
(73) Titulaire: Safran Nacelles, 76700 Gonfreville-l'Orcher (FR)
(72) Inventeur: DELEHOUZE, Arnaud, F-76700 Gonfreville l'Orcher (FR); SENTIS, Sylvain, F-76700 Gonfreville l'Orcher (FR); PRUNIN, Philippe, F-76700 Gonfreville l'Orcher (FR); BOUDARD, Aristide, F-76700 Gonfreville l'Orcher (FR)
(74) Mandataire: Gaillarde, Frédéric F. Ch.
(86) Numéro de dépôt international: PCT/FR2015/052937
(87) Numéro de publication internationale: WO 2016/071611

(56) Documents cités:
- EP-A1- 1 859 923
- US-A1- 2003 188 821
- US-A1- 2011 259 515
- US-A1- 2013 164 481

## Description

L'invention concerne un procédé pour la réparation d'une portion endommagée d'une peau acoustique perforée d'un panneau sandwich, notamment pour ensemble propulsif d'aéronef, et plus particulièrement pour un élément de nacelle de turboréacteur.

Comme cela est connu en soi, un ensemble propulsif d'aéronef comprend classiquement un turboréacteur logé à l'intérieur d'une nacelle.

La nacelle présente généralement une structure tubulaire comprenant une entrée d'air en amont du turboréacteur, une section médiane destinée à entourer une soufflante du turboréacteur et son carter, et une section aval destinée à entourer la chambre de combustion du turboréacteur et abritant le cas échéant des moyens d'inversion de poussée. Elle peut être terminée par une tuyère d'éjection dont la sortie est située en aval du turboréacteur.

Afin de réduire la pollution sonore engendrée par le turboréacteur, il est courant d'équiper plusieurs parties de la nacelle et / ou du turboréacteur de structures d'atténuation acoustiques.

Ces parties de la nacelle et / ou du turboréacteur pourront être, par exemple, une surface interne de veine de circulation d'air pour un turboréacteur double flux, une surface de tuyère ou de cône d'éjection, etc.

Une structure d'atténuation acoustique se présente sous la forme d'un panneau acoustique de type sandwich à âme alvéolaire comprenant, au moins un résonateur, par exemple de type nid d'abeille, recouvert d'une peau externe perforée (dite peau acoustique) et d'une peau interne pleine (dite peau support ou structurante).

L'une et / ou l'autre de ces peaux pourront être réalisées en matériau composite comprenant un ensemble de fibres (superposition de plis fibreux), noyées dans une résine polymérisée.

Les peaux interne et externe sont des surfaces du panneau qui sont exposées au flux d'air circulant à travers l'ensemble propulsif et peuvent être endommagées, et notamment subir des déchirures, perforations, décollements, par exemple aux interfaces peau / structure acoustique nid d'abeille.

Il convient alors de réparer le panneau ainsi endommagé de manière à restituer au panneau ses propriétés, en termes de performances acoustiques et de tenue structurale.

Dans le cas d'un endommagement d'une peau du panneau, celle-ci pourra être réparée en utilisant un doubleur, c'est-à-dire une portion de peau, métallique ou composite par exemple, appliquée en superposition sur la peau à réparer au niveau de la zone endommagée.

L'utilisation de tels doubleurs présente plusieurs inconvénients.

En premier lieu, l'utilisation d'un doubleur, et plus particulièrement d'un doubleur métallique, vient ajouter une certaine masse au panneau, ce qui n'est pas souhaitable.

Aussi, certains panneaux peuvent présenter des structures géométriques particulièrement complexes dues, par exemple, à leur localisation au sein de l'ensemble propulsif (courbure élevée, forme non conventionnelle, etc). Ainsi, il est nécessaire de préparer le doubleur via une mise en forme préalable répondant à la géométrie du panneau à réparer afin d'en faciliter la pose et de restituer au mieux les propriétés dudit panneau.

Une telle opération préalable est longue, complexe et coûteuse.

Il est également connu de déposer la pièce complète endommagée pour pouvoir la réparer en atelier. La réparation est par exemple réalisée par moulage sous vide du doubleur sur la pièce endommagée au moyen d'une vessie englobant toute la pièce endommagée, pour fabriquer le doubleur en matériau composite. Cette opération est longue, couteuse et délicate.

Bien qu'une telle réparation soit efficace, la dépose et la repose de la pièce complète à réparer est chronophage et délicate.

Dans le cas où l'utilisation d'un doubleur est difficile ou que ces inconvénients sont trop importants, il ne restera d'autre solution que de remplacer intégralement le panneau endommagé, ce qui bien évidemment n'est pas souhaitable.

La présente invention vise notamment à résoudre ces inconvénients et se rapporte pour ce faire à un procédé pour la réparation d'une portion endommagée d'une peau perforée d'un panneau au moyen d'un doubleur en matériau composite qui est conçu pour être appliqué sur la portion endommagée de ladite peau perforée, caractérisé en ce que le procédé comporte au moins :
- une étape d'application d'un film d'étanchéité sur la portion endommagée de la peau perforée pour obturer temporairement les perforations de ladite peau, et
- une étape de fabrication du doubleur sur le film d'étanchéité préalablement appliqué ;
- une étape de fixation du doubleur à la peau perforée, de telle manière que le doubleur recouvre la portion endommagée de la peau perforée.

Ainsi, l'invention permet de réaliser le doubleur à même la pièce à réparer, sans devoir fabriquer un moule en forme englobant la pièce. On observera notamment que l'application d'un film d'étanchéité sur la peau perforée rend possible le moulage sous vide du doubleur directement sur la pièce. En effet, grâce au film d'étanchéité, les perforations de la peau perforée sont obturées, évitant ainsi tout passage d'air à travers lesdites obturations. En réalisant un doubleur directement sur la pièce à réparer, on s'assure que la forme de celui-ci sera au plus proche de celle de la surface de la peau à réparer. De plus, cette invention peut permettre d'éviter la dépose de la pièce.

Selon une autre caractéristique, l'étape d'application du film d'étanchéité est précédée par une étape de détermination du point de courbure maximum de la portion endommagée, le point de courbure maximum servant de point de départ pour l'application du film d'étanchéité. Cela permet d'éviter les plissures du film d'étanchéité lors de sa pose sur la peau perforée, et de garantir ainsi l'étanchéité nécessaire à la fabrication du doubleur.

De préférence, le film d'étanchéité présente une face externe qui est non adhérente pour favoriser le retrait du doubleur et présente une face interne qui est adhérente pour favoriser l'adhérence du film d'étanchéité sur la peau perforée.

Aussi, à la suite de l'étape d'application du film d'étanchéité, un ruban adhésif est déposé au moins sur le bord périphérique du film d'étanchéité, notamment pour renforcer le maintien du film d'étanchéité sur la peau perforée et pour garantir l'étanchéité.

Selon une autre caractéristique de l'invention, l'étape de fabrication du doubleur consiste à mouler sous vide le doubleur au moyen d'une vessie qui coopère avec le film d'étanchéité pour former un moule étanche.

Comme mentionné plus haut, l'invention permet de mouler sous vide le doubleur à même la peau à réparer.

De plus, l'étape de fabrication du doubleur comporte une phase d'application d'un joint d'étanchéité autour du doubleur, ledit joint d'étanchéité formant un bourrelet qui est interposé entre la vessie et le film d'étanchéité pour former un moule étanche.

Selon un exemple de réalisation préféré, le joint d'étanchéité comporte au moins un premier cordon d'étanchéité qui recouvre au moins le bord périphérique du ruban adhésif et qui déborde sur la peau perforée, et un second cordon d'étanchéité qui recouvre au moins le bord périphérique du premier cordon et qui déborde sur la peau perforée, de sorte que le second cordon chevauche le premier cordon.

De préférence, le doubleur fabriqué au cours de l'étape de fabrication présente une pluralité de perforations acoustiques.

Enfin, l'étape de fixation du doubleur sur la portion endommagée de la peau perforée est réalisée à la suite de l'étape de fabrication du doubleur, éventuellement après avoir retiré le film d'étanchéité de la peau perforée. L'exposé concerne également un panneau comprenant au moins une peau perforée, caractérisé en ce qu'il peut être obtenu par un procédé selon l'une quelconque des revendications précédentes.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de face, qui illustre une portion endommagée d'une peau perforée d'un panneau sur laquelle un film d'étanchéité est posé, pour la mise en oeuvre du procédé selon l'invention ;
- la figure 2 est une vue schématique en coupe longitudinale du panneau de la figure 1, qui illustre un doubleur mis sous vessie pour la mise en oeuvre du procédé selon l'invention ;
- la figure 3 est une vue schématique en coupe longitudinale du panneau de la figure 1, qui illustre le doubleur de la figure 2 fixé sur la portion endommagée du panneau.

Pour clarifier la description et les revendications, on adoptera à titre non limitatif la terminologie longitudinal, vertical et transversal en référence au trièdre L, V, T indiqué aux figures, dont l'axe L est parallèle à l'axe de la nacelle.

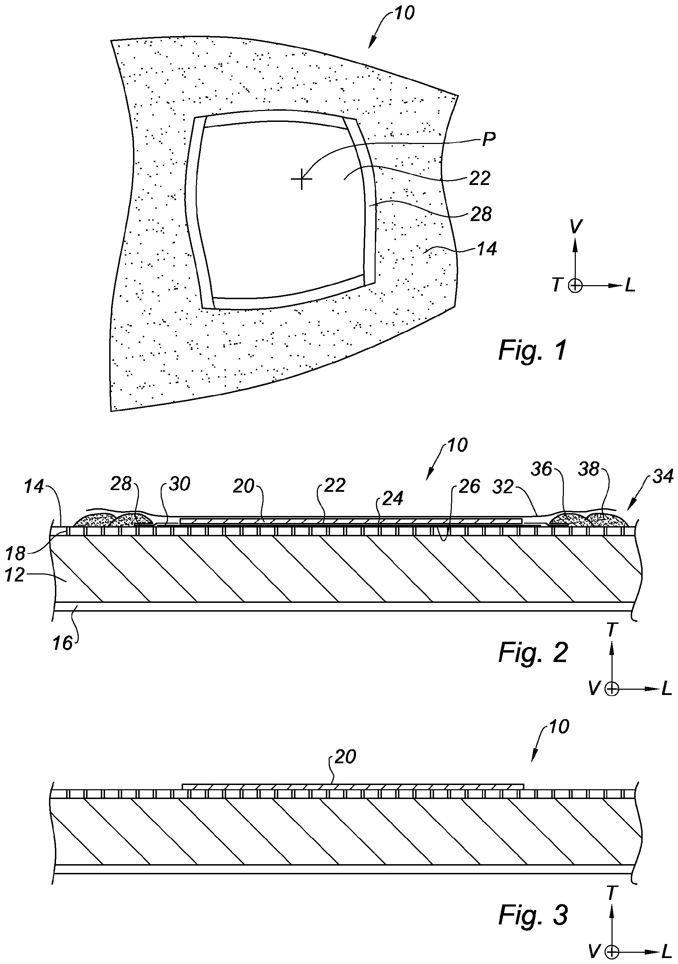

On a représenté à la figure 1 un panneau 10 acoustique qui présente une forme globalement convexe et qui est conçu pour équiper une nacelle d'aéronef. A titre non limitatif, l'invention s'applique également à un panneau acoustique présentant une forme concave ou une double courbure.

Le panneau 10 est ici de type sandwich à âme alvéolaire comprenant, un résonateur 12 visible à la figure 2, par exemple de type nid d'abeille, recouvert d'une peau externe perforée 14, dite peau acoustique, et d'une peau interne pleine 16, dite peau support ou structurante.

La peau perforée 14 est par exemple réalisée en matériau composite comprenant un ensemble de fibres formé par une superposition de plis fibreux, noyées dans une résine polymérisée.

Pour favoriser l'absorption des ondes sonores, la peau perforée 14 comporte une pluralité de perforations 18.

Aussi, la peau perforée 14 présente une portion endommagée que le procédé selon l'invention permet de réparer au moyen d'un doubleur 20 qui est réalisé en matériau composite et qui est conçu pour être appliqué sur la portion endommagée de la peau perforée 14, en surépaisseur de celle-ci. On notera que l'utilisation d'un doubleur ne nécessite pas de retirer la portion endommagée de la peau perforée, le doubleur venant recouvrir intégralement la portion endommagée.

Le procédé objet de l'invention comporte une étape de détermination du point de courbure maximum P de la portion endommagée de la peau perforée 14 convexe.

Une fois le point de courbure maximum P repéré sur la portion endommagée, le procédé comporte une étape d'application d'un film d'étanchéité 22 sur la portion endommagée et au-delà, pour obturer (au moins temporairement) les perforations 18 de la peau perforée 14.

Le point de courbure maximum P sert ici de point de départ pour l'application du film d'étanchéité 22, afin de favoriser l'application de ce film sans plissure.

On notera que le film d'étanchéité 22 peut être appliqué aussi bien en un morceau ou en plusieurs morceaux.

En référence à la figure 2, le film d'étanchéité 22 présente une face externe 24 qui est non adhérente pour favoriser le retrait du doubleur 20, et une face interne 26 qui est adhérente pour favoriser l'adhérence du film d'étanchéité 22 sur la peau perforée 14.

De façon complémentaire, à la suite de l'étape d'application du film d'étanchéité 22, un ruban adhésif 28 est appliqué sur le bord périphérique 30 du film d'étanchéité 22, notamment pour renforcer le maintien du film d'étanchéité 22 sur la peau perforée 14, l'étanchéité étant plus sensible en périphérie du film.

L'étape d'application du film d'étanchéité 22 est suivie par une étape de fabrication du doubleur 20 sur le film d'étanchéité 22.

L'étape de fabrication du doubleur 20 consiste à mouler sous vide le doubleur 20 au moyen d'une vessie 32 de mise sous vide qui recouvre le doubleur 20. La vessie 32 est ici un film souple étanche à l'air.

Dans ce but, des plis fibreux de matériau composite pré-imprégnés de résine formant le doubleur 20 sont appliqués et marouflés sur le film d'étanchéité 22, de sorte que le doubleur 20 épouse parfaitement la forme de la portion endommagée de la peau perforée 14 à réparer.

L'étape de fabrication du doubleur 20 comporte également une phase d'application d'un joint d'étanchéité 34 autour du doubleur 20, comme on peut le voir à la figure 2.

Le joint d'étanchéité 34 forme un bourrelet qui est interposé entre la vessie 32 et le film d'étanchéité 22, de sorte que l'ensemble constitué par la vessie 32, le joint d'étanchéité 34 et le film d'étanchéité 22 forme un moule étanche apte à être mis sous vide.

Selon un exemple de réalisation préféré, le joint d'étanchéité 34 comporte au moins un premier cordon 36 d'étanchéité qui recouvre au moins le bord périphérique du ruban adhésif 28 et qui déborde sur la peau perforée 14, et un second cordon 38 d'étanchéité qui recouvre au moins le bord périphérique du premier cordon 36 et qui déborde sur la peau perforée 14, de sorte que le second cordon 38 chevauche le premier cordon 36.

Un tel agencement permet au premier cordon 36 d'être bloqué sur la peau perforée 14 par le second cordon 38, afin d'éviter le décollement et l'arrachement du premier cordon 36 par la vessie 32 lors de la mise sous vide de la vessie 32.

A la suite de l'application du joint d'étanchéité 34 formé par les deux cordons 36, 38, la vessie 32 est étendue au dessus du doubleur 20 et du joint d'étanchéité 34 de sorte que la vessie 32 coopère avec le film d'étanchéité 22 pour former un moule étanche.

Ce moule étanche est mis sous vide pour compacter les plis fibreux formant le doubleur 20, notamment pour évacuer certains gaz volatils et évacuer le surplus de résine.

A titre non limitatif, selon un autre exemple de réalisation selon lequel les plis fibreux ne sont pas imprégnés de résine, de la résine peut être injectée des les plis fibreux sous vide, dans le moule formé par la vessie 32 le joint d'étanchéité 34 et le film d'étanchéité 22.

A titre non limitatif, tout type de procédé de moulage sous vide est envisageable pour la mise en forme du matériau composite formant le doubleur 20.

Selon un exemple de réalisation, le doubleur 20 fabriqué au cours de l'étape de fabrication présente une pluralité de perforations acoustiques (non représentées), dans le but d'augmenter ses caractéristiques d'absorption acoustique.

Ces perforations sont par exemple réalisées par perçage à la suite du démoulage du doubleur 20.

Enfin, le procédé selon l'invention comporte une étape de fixation du doubleur 20 sur la portion endommagée de la peau perforée 14 pour réparer la portion endommagée, l'étape de fixation étant réalisée à la suite de l'étape de fabrication du doubleur 20, et après avoir retiré le film d'étanchéité 22 de la peau perforée 14, la bande adhésive 28 et le joint d'étanchéité 34.

Le doubleur 20 est par exemple fixé par une fixation mécanique du type rivet, ou par tout autre moyen de fixation adapté (collage, etc.).

Alternativement, on pourra envisager de laisser le film d'étanchéité 22 en place et de fixer le doubleur par-dessus le film d'étanchéité. Cette variante pourra notamment être envisagée lorsqu'il est prévu de fixer le doubleur 20 au moyen de fixations mécaniques.

La présente description de l'invention est donnée à titre d'exemple non limitatif.

## Revendications

1. Procédé pour la réparation d'une portion endommagée d'une peau perforée (14) d'un panneau (10) au moyen d'un doubleur (20) en matériau composite qui est conçu pour être appliqué sur la portion endommagée de ladite peau perforée (14), **caractérisé en ce que** le procédé comporte au moins :
- une étape d'application d'un film d'étanchéité (22) sur la portion endommagée de la peau perforée (14) pour obturer temporairement les perforations de ladite peau, et
- une étape de fabrication du doubleur (20) sur le film d'étanchéité (22) préalablement appliqué ;
- une étape de fixation du doubleur (20) à la peau perforée (14), de telle manière que le doubleur recouvre la portion endommagée de la peau perforée (14).

2. Procédé selon la revendication 1, **caractérisé en ce que** l'étape d'application du film d'étanchéité (22) est précédée par une étape de détermination du point de courbure maximum (P) de la portion endommagée, le point de courbure maximum (P) servant de point de départ pour l'application du film d'étanchéité (22).

3. Procédé selon l'une quelconque des revendications précédentes, **caractérisé en ce que** le film d'étanchéité (22) présente une face externe (24) qui est non adhérente pour favoriser le retrait du doubleur (20) et présente une face interne (26) qui est adhérente pour favoriser l'adhérence du film d'étanchéité (22) sur la peau perforée (14).

4. Procédé selon l'une quelconque des revendications précédentes, **caractérisé en ce que** à la suite de l'étape d'application du film d'étanchéité (22), un ruban adhésif (28) est déposé au moins sur le bord périphérique du film d'étanchéité (22), notamment pour renforcer le maintien du film d'étanchéité (22) sur la peau perforée (14).

5. Procédé selon l'une quelconque des revendications précédentes, **caractérisé en ce que** l'étape de fabrication du doubleur (20) consiste à mouler sous vide le doubleur (20) au moyen d'une vessie (32) qui coopère avec le film d'étanchéité (22) pour former un moule étanche.

6. Procédé selon la revendication 5, **caractérisé en ce que** l'étape de fabrication du doubleur (20) comporte une phase d'application d'un joint d'étanchéité (34) autour du doubleur (20), ledit joint d'étanchéité (34) formant un bourrelet qui est interposé entre la vessie (32) et le film d'étanchéité (22) pour former un moule étanche.

7. Procédé selon la revendication 6, **caractérisé en ce que** le joint d'étanchéité (34) comporte au moins un premier cordon (36) d'étanchéité qui recouvre au moins le bord périphérique du ruban adhésif (28) et qui déborde sur la peau perforée (14), et un second cordon (38) d'étanchéité qui recouvre au moins le bord périphérique du premier cordon (36) et qui déborde sur la peau perforée (14), de sorte que le second cordon (38) chevauche le premier cordon (36).

8. Procédé selon l'une quelconque des revendications précédentes, **caractérisé en ce que** le doubleur (20) fabriqué au cours de l'étape de fabrication présente une pluralité de perforations acoustiques.

9. Procédé selon l'une quelconque des revendications précédentes, caractérisé en ce l'étape de fixation du doubleur (20) sur la portion endommagée de la peau perforée (14) est réalisée à la suite de l'étape de fabrication du doubleur (20), éventuellement après avoir retiré le film d'étanchéité (22) de la peau perforée (14).

## Patentansprüche

1. Verfahren zur Reparatur eines beschädigten Abschnitts einer perforierten Haut (14) einer Platte (10) mit Hilfe eines Verdopplers (20) aus Verbundmaterial, das entworfen ist, um auf dem beschädigten Teil der perforierten Haut (14) aufgetragen zu werden, **dadurch gekennzeichnet, dass** das Verfahren mindestens Folgendes umfasst:
- einen Schritt des Auftragens eines Dichtigkeitsfilms (22) auf den beschädigten Abschnitt der perforierten Haut (14), um vorübergehend die Perforationen der Haut zu verschließen, und
- einen Schritt des Herstellens des Verdopplers (20) auf dem Dichtigkeitsfilm (22), der zuvor aufgebracht wurde;
- einen Schritt des Befestigens des Verdopplers (20) auf der perforierten Haut (14), so dass der Verdoppler den beschädigten Abschnitt der perforierten Haut (14) abdeckt.

2. Verfahren nach Anspruch 1, **dadurch gekennzeichnet, dass** dem Schritt des Auftragens des Dichtigkeitsfilms (22) ein Schritt des Bestimmens des maximalen Krümmungspunkts (P) des beschädigten Abschnitts vorausgeht, wobei der maximale Krümmungspunkt (P) als Ausgangspunkt für das Auftragen des Dichtigkeitsfilms (22) dient.

3. Verfahren nach einem der vorhergehenden Ansprüche, **dadurch gekennzeichnet, dass** der Dichtigkeitsfilm (22) eine äußere Seite (24) aufweist, die nicht haftend ist, um den Rückzug des Verdopplers (20) zu begünstigen, und eine innere Seite (26) aufweist, die haftend ist, um das Haften des Dichtigkeitsfilms (22) auf der perforierten Haut (14) zu begünstigen.

4. Verfahren nach einem der vorhergehenden Ansprüche, **dadurch gekennzeichnet, dass** nach dem Schritt des Aufbringens des Dichtigkeitsfilms (22) ein klebendes Band (28) mindestens auf dem peripheren Rand des Dichtigkeitsfilms (22) abgelegt wird, insbesondere, um den Verbleib des Dichtigkeitsfilms (22) auf der perforierten Haut (14) zu verstärken.

5. Verfahren nach einem der vorhergehenden Ansprüche, **dadurch gekennzeichnet, dass** der Schritt des Herstellens des Verdopplers (20) darin besteht, den Verdoppler (20) unter Vakuum mit Hilfe einer Blase (32) zu formen, die mit dem Dichtigkeitsfilm (22) zusammenarbeitet, um eine dichte Form zu bilden.

6. Verfahren nach Anspruch 5, **dadurch gekennzeichnet, dass** der Schritt des Herstellens des Verdopplers (20) eine Phase des Auftragens einer Dichtung (34) um den Verdoppler (20) umfasst, wobei die Dichtung (34) einen Wulst bildet, der zwischen der Blase (32) und dem Dichtigkeitsfilm (22) angebracht ist, um eine dichte Form zu bilden.

7. Verfahren nach Anspruch 6, **dadurch gekennzeichnet, dass** die Dichtung (34) mindestens eine erste Dichtigkeitsschnur (36) umfasst, die mindestens den peripheren Rand des klebenden Bands (28) abdeckt, und die auf der perforierten Haut (14) hervorsteht, und eine zweite Dichtigkeitsschnur (38), die mindestens den peripheren Rand der ersten Schnur (36) abdeckt, und die auf der perforierten Haut (14) hervorsteht, so dass die zweite Schnur (38) die erste Schnur (36) überlappt.

8. Verfahren nach einem der vorhergehenden Ansprüche, **dadurch gekennzeichnet, dass** der Verdoppler (20), der im Laufe des Schritts des Herstellens hergestellt wurde, eine Vielzahl von akustischen Perforationen aufweist.

9. Verfahren nach einem der vorhergehenden Ansprüche, **dadurch gekennzeichnet, dass** der Schritt des Befestigens des Verdopplers (20) auf dem beschädigten Abschnitt der perforierten Haut (14) nach dem Schritt des Herstellens des Verdopplers (20), eventuell nachdem der Dichtigkeitsfilm (22) von der perforierten Haut (14) zurückgezogen wurde, durchgeführt wird.

## Claims

1. A method for repairing a damaged portion of a perforated skin (14) of a panel (10) by means of a composite material doubler (20) which is designed to be applied on the damaged portion of said perforated skin (14), **characterized in that** the method includes at least:
- one step of applying a sealing film (22) on the damaged portion of the perforated skin (14) to temporarily close the perforations of said skin, and
- one step of manufacturing the doubler (20) on the sealing film (22) applied beforehand;
- one step of fastening the doubler (20) to the perforated skin (14), such that the doubler covers the damaged portion of the perforated skin (14).

2. The method according to claim 1, **characterized in that** the application step of the sealing film (22) is performed by a step of determining the maximum curvature point (P) of the damaged portion, the maximum curvature point (P) serving as a starting point for the application of the sealing film (22).

3. The method according to any one of the preceding claims, **characterized in that** the sealing film (22) has an outer face (24) which is non-adhesive to promote the removal of the doubler (20) and has an inner face (26) which is adhesive to promote the adhesion of the sealing film (22) on the perforated skin (14).

4. The method according to any one of the preceding claims, **characterized in that**, subsequent to the application step of the sealing film (22), an adhesive tape (28) is laid at least on the peripheral edge of the sealing film (22), in particular to reinforce the maintaining of the sealing film (22) on the perforated skin (14).

5. The method according to any one of the preceding claims, **characterized in that** the step of manufacturing the doubler (20) consists in vacuum molding the doubler (20) by means of a bladder (32) which cooperates with the sealing film (22) in order to form a sealed mold.

6. The method according to claim 5, **characterized in that** the manufacturing step of the doubler (20) includes an application phase of a seal (34) around the doubler (20), said seal (34) forming a bead which is interposed between the bladder (32) and the sealing film (22) in order to form a sealed mold.

7. The method according to claim 6, **characterized in that** the seal (34) includes at least one first sealing ring (36) which covers at least the peripheral edge of the adhesive tape (28) and which protrudes over the perforated skin (14), and a second sealing ring (38) which covers at least the peripheral edge of the first sealing ring (36) and which protrudes over the perforated skin (14), so that the second sealing ring (38) overlaps the first sealing ring (36).

8. The method according to any one of the preceding claims, **characterized in that** the doubler (20) manufactured during the manufacturing step has a plurality of acoustic perforations.

9. The method according to any one of the preceding claims, **characterized in that** the fastening step of the doubler (20) on the damaged portion of the perforated skin (14) is carried out subsequent to the manufacturing step of the doubler (20), possibly after the sealing film (22) has been removed from the perforated skin (14).
